# EUROPÄISCHE PATENTSCHRIFT

(11) **EP 3 736 541 B1**
(45) Veröffentlichungstag und Bekanntmachung des Hinweises auf die Patenterteilung: **28.02.2024**
(21) Anmeldenummer: 20171545.5
(22) Anmeldetag: 27.04.2020
(51) Int. Cl.: G01D 5/24, G01D 5/241, G01L 1/14

(54) **KAPAZITIVES SENSORSYSTEM UND VERFAHREN ZUR MULTIMODALEN UND/ODER ORTSSELEKTIVEN MESSUNG VON KRÄFTEN, VERFORMUNGEN UND/ODER OBJEKT-NÄHERUNG**
CAPACITIVE SENSOR SYSTEM AND METHOD FOR MULTIMODAL AND / OR LOCATION-SELECTIVE MEASUREMENT OF FORCES, DEFORMATIONS AND / OR OBJECT PROXIMITY
SYSTÈME DE CAPTEUR CAPACITIF ET PROCÉDÉ DE MESURE MULTIMODALE ET/OU SÉLECTIVE LOCALE DES FORCES, DES DÉFORMATIONS ET/OU DE L'APPROCHE D'UN OBJET

(30) Priorität: 09.05.2019 DE 102019206670
(43) Veröffentlichungstag der Anmeldung: 11.11.2020
(73) Patentinhaber: Fraunhofer-Gesellschaft zur Förderung der angewandten Forschung e.V., 80686 München (DE)
(72) Erfinder: STIER, Simon, 97082 Würzburg (DE); BÖSE, Dr. Holger, 97082 Würzburg (DE)
(74) Vertreter: Pfenning, Meinig & Partner mbB

(56) Entgegenhaltungen:
- EP-A1- 2 922 205
- WO-A1-2018/011464
- WO-A1-2018/134081
- WO-A2-2020/157504
- DE-A1-102014 201 434
- JP-A- 2013 015 976
- US-A1- 2018 358 965
- Seghir R ET AL: "Extended PDMS stiffness range for flexible systems Extended PDMS stiffness range for flexible systems", , 1 January 2015 (2015-01-01), XP055925539, Retrieved from the Internet: URL:https://hal.archives-ouvertes.fr/hal-0 2345519/file/PDMS_Seghir_Arscott.pdf [retrieved on 2022-05-27]

## Beschreibung

Die vorliegende Erfindung betrifft ein kapazitives Sensorsystem zur multimodalen und/oder ortsselektiven Messung von Kräften, Verformungen und/oder Objekt-Näherung sowie ein entsprechendes Messverfahren. Verwendung findet das erfindungsgemäße kapazitive Sensorsystem in den Bereichen der Industrie, Automobil, Medizin sowie Sport und Freizeit.

In vielen Bereichen ist die Messung von Druck- und Scherkräften sowie Abstand eines Objektes zur Umgebungscharakterisierung eines technischen Systems relevant. Konventionelle Sensoren, zumeist auf Halbleiterbasis, sind dabei aus starren Materialien gefertigt und erlauben daher lediglich die Anwendung auf definierten, unbeweglichen Oberflächen. Folienbasierte Sensoren sind hingegen flexibel und können zumindest auf eindimensional beweglichen bzw. eindimensional gekrümmten Oberflächen verwendet werden. Für zweidimensional bewegliche bzw. zweidimensional gekrümmten Oberflächen, wie beispielsweise ein Textilgewebe oder menschliche Haut, kommen hingegen nur elastische Sensoren in Frage, insbesondere dielektrische Elastomersensoren. Zudem gewinnt auch die Überwachung bestehender Elastomerbauteile an Bedeutung, beispielsweise Motorlager oder Riemen, deren mechanische Eigenschaften durch Hinzufügen einer sensorischen Funktion nicht beeinträchtigt werden dürfen.

Dielektrische Elastomersensoren sind flexible und auch dehnbare Sensoren mit einem kapazitiven Messprinzip. In ihrer einfachsten Form bestehen sie aus einer dehnbaren Elastomerfolie als Dielektrikum, die beidseitig mit leitfähigen und ebenfalls dehnbaren Schichten als Elektroden bedeckt ist. Damit entsteht ein mechanisch verformbarer elektrischer Kondensator, dessen Kapazität mit der Dehnung der Elastomerfolie stetig ansteigt. Neben solchen Dehnungssensoren lassen sich mit einem geeigneten geometrischen Aufbau von Elastomer-Dielektrikum und Elektrodenschichten auch dielektrische Elastomersensoren realisieren, bei denen eine elektrische Kapazität mit einem angelegten Druck bzw. einer Kraft auf die Oberfläche, mit einer Scherkraft oder mit der Annäherung eines elektrisch leitfähigen oder polarisierbaren Körpers wie z. B. die menschliche Hand messbar ansteigt. Solche dielektrischen Elastomersensoren gehören zum Stand der Technik.

Wie grundsätzlich bei allen Sensorprinzipien möglich, kann auch bei dielektrischen Elastomersensoren eine ortsaufgelöste und multimodale Messung durch eine Verteilung mehrerer Instanzen verschiedener Sensortypen auf einer Oberfläche bzw. in einem Volumen erfolgen. Dieses Vorgehen zieht jedoch eine erhebliche Fertigungskomplexität nach sich, da jede Instanz separat hergestellt, befestigt und kontaktiert werden muss und zudem Detektionslücken (bei Anordnung verschiedener Sensortypen nebeneinander) oder Signalverfälschungen (bei Anordnung verschiedener Sensortypen übereinander) auftreten. Weiterhin kann bei herkömmlichen Sensorsystemen das von der Messung erfasste Volumen nicht optimal eingegrenzt werden, so gehen beispielsweise auch Zuleitungen oder Randbereiche in die Messung ein.

Grundsätzlich ergeben sich für dielektrische Elastomersensoren wie auch für andere Sensoren also folgende Schwierigkeiten:
- Erfassung und Lokalisierung mehrerer Modalitäten wie Kräfte, Verformungen, Objekt-Näherung etc.
- Separation des Einflusses verschiedener externer Größen auf die gemessene(n) Kapazität(en)
- Limitierung des von der Messung erfassten Volumens, z.B. Ausschluss von Randbereichen oder Zuleitungen
- Minimierung der Anzahl notwendiger Elektroden bzw. Zuleitungen zur Reduzierung der Komplexität

Zur (ortsaufgelösten) Detektion von Druck, Scherung (US2018/0073942), Dehnung und Näherung existieren bereits eine Vielzahl von Konzepten, die jedoch auf der (teilweisen) Verwendung von unelastischen Komponenten basieren. Dazu zählen Folien-Elektroden aus Metall, metallisierten Polymeren oder intrinsisch leitfähigen Polymeren sowie starre Leiterplatten und Halbleiterstrukturen. Gerade wegen der unelastischen Natur der üblicherweise verwendeten Elektrodenmaterialien sind multimodale, übereinander gelagerte Systeme bisher kaum beschrieben worden, da beispielsweise eine unelastische Schicht zur Näherungsdetektion die lokale Verformung einer darunterliegenden drucksensitiven Schicht behindern würde. Zudem erhöht das bloße Aufeinanderstapeln von Sensorschichten erheblich die Dicke des Gesamtaufbaus sowie die Komplexität der Fertigung. Eine multimodale Messung von Näherung und Kraft ist z.B. in WO2018/012329A1 beschrieben, jedoch unter Verwendung starrer Materialien und teilweise magnetischer Messprinzipien (Kraftmessung).

Um die Zuleitung von der Messung auszuschließen, ist diese in der Regel aus unelastischen Materialien gefertigt, z.B. Koaxial-Kabel, Platine, und mit einer Masse-Schirmung versehen. Dies erschwert jedoch die zweckmäßige Verwendung des Elastomersensors erheblich, da die Zuleitung einer Dehnungsbeanspruchung nicht folgen kann. Alternativ ist die Sensorzuleitung ungeschirmt, was jedoch insbesondere bei kleinen Sensorkapazitäten durch Einkopplung von Störfeldern oder Änderungen in der dielektrischen Umgebung zu einem schlechten Signal-Rausch-Verhältnis führt.

Zur Ortsauflösung ist eine Matrix-Anordnung der Elektroden etabliert, z.B. für die Druckmessung beschrieben in EP 2 899 521 B1. Jedoch genügt die bloße Anordnung der Elektroden in dieser Form und die Messung der Kapazität zwischen den einzelnen Elektroden nur zur einer groben, qualitativen Erfassung der Eingangsgröße und deren Flächenverteilung, da es ohne zusätzlich technische Maßnahmen zu einer Einkopplung der Kapazitäten zwischen den übrigen Elektroden kommt. Essentiell für eine präzise quantitative Erfassung ist die gleichzeitige vollständige Ausblendung der übrigen Kapazitäten durch Neutral-Schaltung der übrigen Elektroden. Im Falle eines elastischen Sensors mit Matrixanordnung ist zudem unklar, wie die Kapazitätsänderung durch Änderung der eigentlichen Messgröße (z.B. Druck) von der Beeinflussung durch Dehnung des Sensors (z.B. durch Applikation auf einem Polster) unterschieden werden kann. Selbiges gilt auch für den in DE 11 2013 001 251 T5 beschriebenen kombinierten, ortaufgelösten Näherungs- und Drucksensor. Dieser Aufbau stellt zudem eine bloße Überlagerung von bekannten Sensorprinzipien ohne Ausnutzung von Synergien bzw. Vermeidung von Redundanz zur Platz- und Kosteneinsparung dar. WO2015/198208 A1 zeigt wiederum einen Aufbau mit einer zweilagigen Matrix, die gleichzeitig Näherung und Druck ortsaufgelöst erfassen soll. Die Anforderung der (auf dem Prinzip der Gegenkapazität beruhenden) Näherungsmessung, ein möglichst geringer Überlappungsgrad zwischen den Elektroden, kollidiert dabei jedoch direkt mit der Anforderung der Druckmessung nach einem möglichst hohen Überlappungsgrad. In der dargestellten Form ist von Näherungsmessung und/oder Druckmessung nur ein geringes Signal-Rausch-Verhältnis zu erwarten.

Die Neutral-Schaltung von Elektroden zur Limitierung des Messbereichs ist zwar in der konventionellen Leiterplattentechnik bekannt, jedoch wurde das Potential für Elastomersensoren bislang noch nicht erkannt. Neutrale Schirmungen für kapazitive Touch-Eingabefelder wurden u.a. bereits in US2012/0074961 A1 beschrieben, finden dort jedoch nur auf starren Leiterplatten bzw. flexiblen Folienleitern Anwendung. Zudem wird die spezifische Beschaltung der Elektroden nur zur Verringerung der Gesamtkapazität und des Systemrauschens eingesetzt, nicht aber zur Orts- oder Modalitätsselektion. In US2018/0073942 A1 wird eine Neutralschaltung zur Kraft- und Drehmomentmessung eingesetzt, es handelt sich jedoch um einen starren Aufbau.

Die WO 2018/134081 A1 offenbart eine Vorrichtung zum Erfassen eines Objekts in Bezug auf eine Erfassungsfläche, wobei die Vorrichtung eine Messelektrode, mindestens eine Schutzelektrode mit dem gleichen Wechselpotential wie die Messelektrode und mindestens eine Polarisationselektrode aufweist.

Die US 2018/358965 A1 offenbart einen Näherungssensor und ein damit ausgestattetes tragbares Gerät mit mindestens zwei übereinanderliegenden Erfassungselektroden, von denen eine die andere teilweise abschirmt.

Die EP 2 922 205 A1 offenbart ein kapazitives Positionserfassungssystem, das eine Aufnahmeelektrode, eine Abschirmelektrode, ein im Wesentlichen geerdetes, relativ bewegliches Ziel in der Nähe der Aufnahmeelektrode, einen Kapazitäts-Digital-Wandler und ein Schaltmittel aufweist.

Die JP 2013 015976 A offenbart einen Multifunktionssensor, umfassend eine flache erste Elektrode, eine zweite Elektrode, die so angeordnet ist, dass ein Dielektrikum mit Plastizität oder Elastizität gegenüber äußeren Kräften zwischen der ersten Elektrode und der zweiten Elektrode liegt, eine dritte Elektrode, die so angeordnet ist, dass ein hartes Dielektrikum zwischen der zweiten Elektrode und der dritten Elektrode liegt, ein Dielektrikum, das so laminiert ist, dass es eine Oberfläche der dritten Elektrode bedeckt, eine erste Messeinheit zum Messen einer Potentialdifferenz zwischen einer Messoberfläche der dritten Elektrode 14 und der ersten Elektrode 10, eine zweite Messeinheit zum Messen einer Potentialdifferenz zwischen der zweiten Elektrode und der ersten Elektrode, und eine Schalteinheit zum Durchführen eines Umschaltens zwischen einem ersten Verbindungszustand, in dem die zweite Elektrode mit der Erde verbunden ist, und einem zweiten Verbindungszustand, in dem die dritte Elektrode mit der Erde verbunden ist.

Die DE 10 2014 201434 A1 offenbart eine volumenkompressible, kapazitive, flächige, flexible Sensormatte zur Messung/Erfassung von Druck oder Deformationen bzw. deren Verteilung auf flexiblen flächigen Unterlagen, die mindestens zwei Elektroden aufweist, zwischen denen die elektrische Kapazität gemessen werden kann.

Die WO 2018/011464 A1 offenbart einen Sensor, umfassend eine elastische und dehnbare Schicht mit Material mit einem ersten Elastizitätsmodul und einer ersten Streckgrenze, mindestens eine erste dehnbare Elektrode und eine zweite dehnbare Elektrode, die an der elastischen und dehnbaren Schicht befestigt und in einem ersten Abstand voneinander entfernt angeordnet sind, wobei der Sensor ferner eine flexible Folie mit einem zweiten Elastizitätsmodul und eine elektrisch leitende Verkabelung umfasst, die an der flexiblen Folie befestigt ist.

Seghir, R. & Arscott, S (Sensors and Actuators A: Physical, 230:33-39, 2015) offenbaren, dass sich die Steifigkeit von PDMS einstellen lässt, indem das Verhältnis von Härter zu PDMS-Basis von 19:1 bis 2:1 variiert wird und zwei extreme Aushärtungsprozesse verwendet werden, d. h. 120 Minuten bei 100 °C und 2 Tage bei 165 °C, wobei die Steifigkeit von PDMS von 800 kPa bis 10 MPa mit einer Bruchgrenze von mehr als 20 % genau gesteuert werden kann.

Zusammengefasst sind bestehende Sensorkonzepte entweder nicht flexibel und dehnbar oder aber durch Materialbeschaffenheit, Geometrie und elektrischer Beschaltung nicht zur präzisen ortsselektiven und/oder multimodalen Messung geeignet.

Ausgehend hiervon war es Aufgabe der vorliegenden Erfindung die beschriebenen Nachteile des Standes der Technik zu beseitigen und ein Sensorsystem bereitzustellen, dass zum einen eine ortsselektive oder multimodale Messung erlaubt und gleichzeitig flexibel und bei Bedarf sogar dehnbar, zum Beispiel als Folie, aufgebaut ist.

Diese Aufgabe wird durch das kapazitive Sensorsystem mit den Merkmalen des Anspruchs 1 und das Verfahren zur multimodalen und/oder ortsselektiven Messung von Kräften, Verformungen und/oder Objekt-Näherung mit den Merkmalen des Anspruchs 11 gelöst.

Im Folgenden werden die im Rahmen dieser Anmeldung verwendeten Begrifflichkeiten mit zugehöriger Bedeutung kurz erläutert:
**Dielektrischer Körper:** Körper, der zumindest teilweise von einem elektrischen Feld durchsetzt ist.

**Elastomer:** Material, das um mehr als 5%, bevorzug mehr als 10% und besonders bevorzugt um mehr als 15% elastisch verformbar ist.

**Elektrode:** Elektrischer Leiter innerhalb oder auf dem dielektrischen Körper inklusive elektrischer Verbindung zum Multiplexer.

**Zuleitung:** Teil der Elektrode, der nur der Verbindung zum Multiplexer und nicht der Messfunktion dient. I.d.R. werden die Abmessungen der Zuleitung möglichst gering gehalten um deren Beeinflussung der Messung zu minimieren. Im Falle der Zuleitung einer Messelektrode kann die Beeinflussung zusätzlich durch eine oder mehrere zumindest bereichsweise umgebende Neutralelektrode(n) minimiert werden.

**Modalität:** Externe vorgegebene Messgröße, die durch einen Sensor erfasst werden kann. Dazu zählen u.a. geometrisch Größen (Abstände, Flächen, Verformungen), mechanische Größen (Kräfte, mech. Spannung, Druck), Temperatur und Konzentration von chemischen Substanzen wie z. B. Wassergehalt.

**Multimodalität:** Eigenschaft eines Sensors, mehrere Modalitäten erfassen zu können.

**Ortsauflösung:** Eigenschaft eines Sensors, eine Aussage über den Verlauf einer oder mehrerer Modalitäten innerhalb eines Volumens, einer Fläche oder entlang einer Linie treffen zu können.

**Multiplexer:** Schaltmechanismus, der im Gegensatz zu einer festen Verdrahtung eine veränderliche Zuordnung von einer Signalgruppe zu einer weiteren Signalgruppe ermöglicht, im konkreten Fall die Elektroden des Sensors mit den Signalanschlüssen der Messeinheit(en).

**Kapazität:** Verhältnis der auf zwei voneinander isolierten elektrischen Leiter gespeicherten Ladung und der Potentialdifferenz zwischen beiden Leitern. Die Kapazität einer komplexen Leiteranordnung ist in der Regel nicht direkt zugänglich, sondern wird über die Beobachtung einer Ladungsmenge bei einem bekannten Potential bzw. bei einer bekannten Potentialänderung (und umgekehrt erfasst).

**Kapazitäts-Messeinheit:** Elektronische Schaltung, die der direkten oder indirekten Bestimmung einer elektrischen Kapazität dient, z. B. durch Messen einer Zeit, Spannung oder Ladungsmenge. Häufig genutzte Komponenten hierfür sind Konstantstromquellen, Komperatoren, Operationsverstärker, Referenzkapazitäten, Schwingkreise, Taktsignale und Analog-Digital-Wandler.

**Eigenkapazität:** Kapazität eines Leiters (Messleiter) bezüglich eines weiteren Leiters (Referenzleiter) mit konstantem Potential, in der Regel Massepotential, wobei sich der weitere Leiter auch im unendlichen Abstand befinden kann. Zur Messung wird i.d.R. das Potential des Messleiters zeitlich variiert und die daraus resultierende Ladungsverschiebung am Messleiter selbst betrachtet.

**Gegenkapazität:** Kapazität eines Leiters (Messleiter) bezüglich eines weiteren Leiters (Referenzleiter) mit zeitlich variierendem Potential. Zur Messung wird i.d.R. der Potentialverlauf des Referenzleiters vorgegeben und die resultierende Ladungsverschiebung am Messleiter betrachtet.

**Messelektrode(n):** Eine oder mehrere Elektroden, deren Kapazität gegenüber einer oder mehreren Referenzelektroden Gegenstand der Messung ist. Bei einer Eigenkapazitätsmessung kann statt einer Referenzelektrode auch ein Referenzleiter in der Umgebung des Sensors (unendlich entferntes Massepotential, elektrisch leitfähige Körper) herangezogen werden. Bei einer Eigenkapazitätsmessung wird das Potential der Messelektrode(n) i.d.R. durch eine niederohmige Spannungsquelle zeitlich variiert und aktiv betrieben. Bei einer Gegenkapazitätsmessung wird/werden die Messelektrode/Messelektroden i.d.R. passiv betrieben.

**Referenzelektrode(n):** Eine oder mehrere Elektroden, gegenüber denen die Kapazität der Messelektroden erfasst wird. Bei einer Eigenkapazitätsmessung ist deren Potential i.d.R. zeitlich konstant auf Massepotential. Bei einer Gegenkapazitätsmessung ist deren Potential i.d.R. zeitlich variabel und durch eine niederohmige Spannungsquelle definiert.

**Neutralelektrode(n):** Eine oder mehrere Elektroden, deren Potential bzw. zeitlicher Potentialverlauf derart beschaffen ist, dass sie explizit keine Referenzelektroden darstellen. Bei einer Eigenkapazitätsmessung befinden sich diese i.d.R. auf dem (annähernd) gleichen Potential wie die Messelektrode(n), wodurch zwischen beiden keine Ladungsverschiebung auftritt. Bei einer Gegenkapazitätsmessung befinden sich diese i.d.R. auf einem zeitlich konstanten Potential, so dass die damit verbundene konstante Ladungsverschiebung auf der/den Messelektrode/Messelektroden von der zeitlich veränderlichen Ladungsverschiebung durch die Referenzelektroden unterscheidbar bleibt. Unterliegt die Kapazität zwischen Neutral- und Messelektroden ebenfalls zeitlichen Änderungen, so bleibt die Unterscheidbarkeit der Ladungsverschiebung auf den Messelektroden noch durch eine i.d.R. um Größenordnungen schnellere Potentialänderung auf den Referenzelektroden gegeben.

**Messkonfiguration:** Konkrete Zuordnung jeder Elektrode des Sensors zu höchstens einem Elektrodentyp ausgewählt aus Messelektrode, Referenzelektrode und Neutralelektrode. Verschiedene Messkonfigurationen unterscheiden sich i.d.R. in der erfassten Modalität und/oder im Ort der Erfassung und ermöglichen damit Multimodalität und Ortsauflösung.

Erfindungsgemäß wird ein kapazitives Sensorsystem bereitgestellt, das folgende Komponenten enthält:
a. mindestens einen dielektrischen Körper, der mindestens ein Elastomer enthält oder daraus besteht,
b. mindestens zwei elektrisch voneinander isolierte Elektroden mit separaten elektrischen Anschlüssen, wobei die Elektroden aus elastischen Materialien aufgebaut sind und leitfähige Partikel enthalten,
c. mindestens eine Kapazitäts-Messeinheit, die jeweils folgende Signalanschlüsse aufweist:
   i. Messsignal-Anschluss zur Erfassung des Ladungsflusses von/zu den damit verbundenen Elektroden, die als Messelektroden während der Messung fungieren,
   ii. Referenzsignal-Anschluss mit vorgegebenem Potentialverlauf, wobei die mit dem Referenzsignal-Anschluss verbundenen Elektroden als Referenzelektroden für die Messung der Kapazität der Messelektroden fungieren, indem die Potentialdifferenzen zwischen Referenz- und Messelektroden einen Ladungsfluss am Messsignal-Anschluss verursachen
   iii. Neutralsignal-Anschluss mit vorgegebenem Potentialverlauf, wobei die Kapazität(en) der Messelektroden bezüglich der mit dem Neutralsignal-Anschluss verbundenen Elektroden als Neutralelektroden in Verbindung mit den vorliegenden Potentialdifferenzen zwischen Mess- und Neutralelektroden keinen Beitrag zum am Messsignal-Anschluss erfassten Ladungsfluss leisten oder deren Beitrag deutlich vom Beitrag der Kapazitäten zwischen Referenz- und Messelektroden unterscheidbar ist
d. mindestens einen Multiplexer zur zeitlich veränderbaren Schaltung der Elektroden mit den Signalanschlüssen der Messeinheit(en) in verschiedenen Messkonfigurationen, wobei eine Messkonfiguration die Zuordnung jeder Elektrode des Sensorsystems zu einem Signalanschluss realisiert,

wobei der mindestens eine dielektrische Körper und die Elektroden um mehr als 5% elastisch dehnbar sind,
wobei der mindestens eine dielektrische Körper aus mehreren dielektrischen Schichten besteht, und
wobei der mindestens eine dielektrische Körper anisotrope Hohlräume enthält.

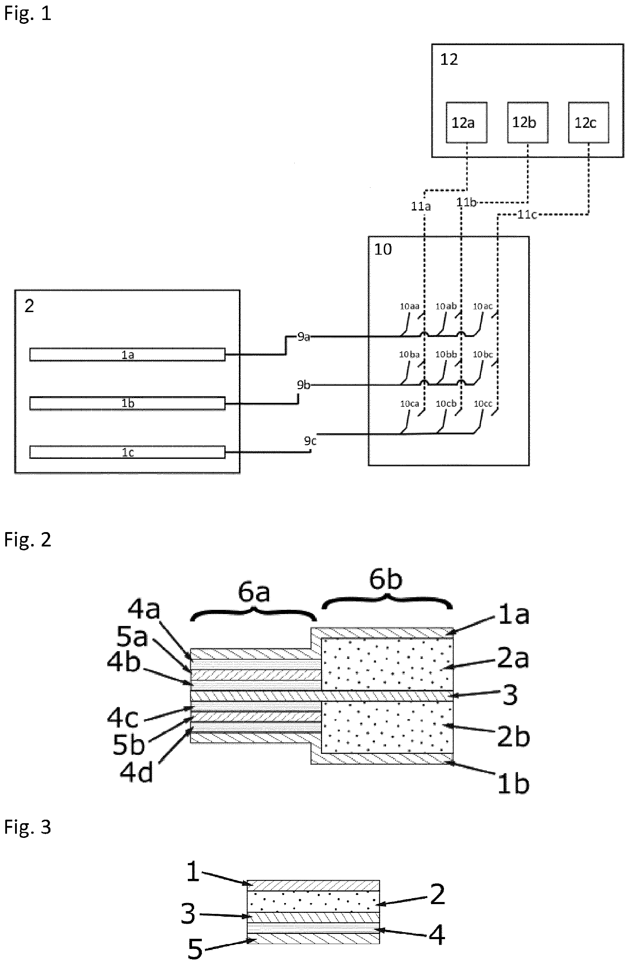

Ein beispielhaftes Sensorsystem ist in Fig. 1 dargestellt, bestehend aus dielektrischem Körper (2) mit Elektroden (1a-c) inklusive Zuleitung (9a-c), Multiplexer (10) mit Schaltmatrixelementen (10aa-cc), elektrischen Verbindungen (11a-c) zwischen Multiplexer (10) und Kapazitäts-Messeinheit (12) sowie Kapazitäts-Messeinheit mit Signalanschlüssen (12a-c).

Die Fähigkeit des erfindungsgemäßen elastomeren Sensorsystems zur multimodalen und/oder ortsaufgelösten Messung bei gleichzeitig geringer Fertigungskomplexität ist nur durch ein eng verzahntes Zusammenspiel aus Sensormaterialien, Sensorgeometrien und elektrischen Ansteuerung möglich.

Grundsätzlich ist bei der Kapazitätsmessung zwischen der Eigen-Kapazität einer Elektrode zu einem Bezugspotential (in der Regel das Massepotential) und der Gegenkapazität zwischen zwei Elektroden mit unterschiedlichem Potential zu unterscheiden.

In beiden Messverfahren existiert/existieren jeweils eine oder mehrere Elektroden folgender zuvorgehend definierter Klassen:
- Messelektrode (M)
- Referenzelektrode (R)
- Neutralelektrode (N)

Der mindestens eine dielektrische Körper und die Elektroden sind zumindest teilweise aus elastischen Materialien aufgebaut. Erfindungsgemäß sind die Elektroden aus elastischen Materialien aufgebaut und enthalten leitfähige Partikel. Dabei besteht der mindestens eine dielektrische Körper erfindungsgemäß aus mehreren dielektrischen Schichten. Ihr Verhalten bei Beanspruchung durch externe Kräfte lässt sich jedoch in folgende Klassen aufteilen:
- elastisch-volumeninkompressibel, in der Regel durchgängige Elastomerschicht / Elastomervollvolumen (I)
- elastisch-volumenkompressibel mit isotropem Verformungswiderstand, z.B. durch Gaseinschlüsse, Poren, Schaumstrukturen, kurze Noppen, Taschen etc. (K)
- elastisch-volumenkompressibel mit anisotropem Verformungswiderstand, z.B. durch gezielte Strukturierung wie längliche Noppen, dünne Lamellen, etc. (V)

Die wesentlichen Vorteile der vorliegenden Erfindung liegen in der Differenzierung und Lokalisierung mehrerer externer Einflüsse durch ein einzelnes Sensorbauteil bei gleichzeitig minimaler Komplexität des Sensors aufgrund der geringen Anzahl von Elektroden und Schichten sowie in den elastischen Eigenschaften des Sensorsystems. Damit können gegenüber getrennten Sensoren sowohl Bauraum als auch Kosten in der Herstellung eingespart werden. Gleichzeitig kann durch dynamische Beschaltung der Elektroden der konkrete Messmodus, d.h. die Auswahl der zu detektierenden externen Größe und die Auswahl des aktiven Messbereichs, vom geometrischen, nicht variierbaren Aufbau in die Software des Messsystems verlagert werden und zeitlich flexibel variiert werden. So kann z.B. ein kombinierter Druck-Näherungssensor zunächst mit hoher Abtastung eine reine Näherungsmessung durchführen, bei detektiertem Kontakt jedoch auf eine reine Druckmessung umschalten. Ebenso kann in einem ortsaufgelösten System dynamisch ein ROI-Bereich (engl. *Region of Interest,* ROI) definiert werden, der schneller oder genauer als die übrigen Bereiche abgetastet wird.

Es ist bevorzugt, dass das Elastomer im dielektrischen Körper ein Material ausgewählt aus der Gruppe bestehend aus Silicon, Fluorsilicon, Polyurethan (PUR), Polynorbornen, Naturkautschuk (NR), Styrol-Butadien (SBR), Isobutylen-Isopren (IIR), Ethylen-Propylen-Dien-Terpolymer (EPDM/EPM), Poly-Chlorbutadien (CR), chlorsulfoniertem Polyethylen (CSM), Acrylnitril-Butadien (NBR), hydriertem Acrylnitril-Butadien (HNBR), Fluorkautschuk, thermoplastischen Elastomeren, insbesondere thermoplastischen Styrol-Copolymeren, bevorzugt ausgewählt aus der Gruppe bestehend aus Styrol-Butadien-Styrol-(SBS-), Styrol-Ethylen-Butadien-Styrol- (SEBS-), Styrol-Ethylen-Propylen-Styrol-(SEPS-), Styrol-Ethylen-Ethylen-Propylen-Styrol- (SEEPS-), Styrol-Isopren-Styrol- (SIS-) und Kombinationen hiervon, teilvernetzten Blends auf Polyolefin-Basis, bevorzugt ausgewählt Ethylen-Propylen-Dien-Kautschuken und Polypropylen (EPDM/PP), Nitril-Butadien-Kautschuk und Polypropylen (NBR/PP) sowie aus Ethylen-Propylen-Dien-Kautschuk und Polyethylen (EPDM/PE), thermoplastische Urethan-Copolymere, bevorzugt ausgewählt aus Copolymeren mit aromatischem Hartsegment und Ester-Weichsegment (TPU-ARES), aromatischem Hartsegment und Ether-Weichsegment (TPU-ARET) und aromatischem Hartsegment und Ester/Ether-Weichsegment (TPU-AREE) sowie Mischungen der genannten Elastomermaterialien enthält oder hieraus besteht.

Dabei ist es bevorzugt, dass mindestens eine der dielektrischen Schichten elastisch-volumenkompressibel ist, wobei die Schichten bevorzugt einen isotropen oder anisotropen Verformungswiderstand aufweisen.

Vorzugsweise ist im Zeitpunkt einer Messung jeder Signalanschluss der Kapazitäts-Messeinheit mit mindestens einer Elektrode verbunden. Vorzugsweise ist im Zeitpunkt einer Messung weiterhin jede Elektrode mit höchstens einem Signalanschluss der Kapazitäts-Messeinheit(en) verbunden, besonders bevorzugt mit genau einem Signalanschluss.

Es ist bevorzugt, dass die Messkonfigurationen der Zuordnung der Elektroden des Sensorsystems zu den Anschlüssen der Messeinheit zeitlich variabel über die Betriebszeit sind.

Eine weitere bevorzugte Ausführungsform sieht vor, dass im Zeitpunkt der Messung die Messelektrode im Bereich der elektrischen Zuleitung durch mindestens eine Neutralelektrode zumindest bereichsweise umgeben ist, so dass der Zuleitungsbereich die Messung nicht beeinflusst.

Die Kapazitäts-Messeinheit weist vorzugsweise Mittel zur Verstimmung eines Schwingkreises oder einen kapazitiven Spannungsteiler oder einen Delta-Sigma-Modulator zur Messung der Kapazität auf, insbesondere zur Erfassung einer Ladezeit oder einer Ladungsmenge.

Der mindestens eine dielektrische Körper weist vorzugsweise die Form eines flächigen Gebildes mit in einer Dimension geringeren Abmessungen als in den anderen beiden Dimensionen, insbesondere eine Folie, auf. Erfindungsgemäß enthält der mindestens eine dielektrische Körper anisotrope Hohlräume.

Bevorzugt enthalten die Elektroden ein Elastomer und leitfähige Partikel, bevorzugt enthaltend oder bestehend aus Kohlenstoff und/oder Metallen.

Es ist bevorzugt, dass das Elastomer in den Elektroden ein Material ausgewählt aus der Gruppe bestehend aus Silicon, Fluorsilicon, Polyurethan (PUR), Polynorbornen, Naturkautschuk (NR), Styrol-Butadien (SBR), Isobutylen-Isopren (IIR), Ethylen-Propylen-Dien-Terpolymer (EPDM/EPM), Poly-Chlorbutadien (CR), chlorsulfoniertem Polyethylen (CSM), Acrylnitril-Butadien (NBR), hydriertem Acrylnitril-Butadien (HNBR), Fluorkautschuk, thermoplastischen Elastomeren, insbesondere thermoplastischen Styrol-Copolymeren, bevorzugt ausgewählt aus der Gruppe bestehend aus Styrol-Butadien-Styrol-(SBS-), Styrol-Ethylen-Butadien-Styrol- (SEBS-), Styrol-Ethylen-Propylen-Styrol-(SEPS-), Styrol-Ethylen-Ethylen-Propylen-Styrol- (SEEPS-), Styrol-Isopren-Styrol- (SIS-) und Kombinationen hiervon, teilvernetzten Blends auf Polyolefin-Basis, bevorzugt ausgewählt Ethylen-Propylen-Dien-Kautschuken und Polypropylen (EPDM/PP), Nitril-Butadien-Kautschuk und Polypropylen (NBR/PP) sowie aus Ethylen-Propylen-Dien-Kautschuk und Polyethylen (EPDM/PE), thermoplastische Urethan-Copolymere, bevorzugt ausgewählt aus Copolymeren mit aromatischem Hartsegment und Ester-Weichsegment (TPU-ARES), aromatischem Hartsegment und Ether-Weichsegment (TPU-ARET) und aromatischem Hartsegment und Ester/Ether-Weichsegment (TPU-AREE) sowie Mischungen der genannten Elastomermaterialien enthält oder hieraus besteht. Erfindungsgemäß sind der mindestens eine dielektrische Körper und die Elektroden um mehr als 5%, bevorzugt um mehr als 10% und besonders bevorzugt um mehr als 15%, elastisch dehnbar.

Erfindungsgemäß wird ebenso ein Verfahren zur multimodalen und/oder ortsselektiven Messung von Kräften, Verformungen und/oder Objekt-Näherung bereitgestellt, bei dem das zuvor beschriebene kapazitive Sensorsystem eingesetzt wird.

Bei dem erfindungsgemäßen Verfahren ist es bevorzugt, dass zumindest innerhalb eines Zeitabschnittes die Messung der Kapazität am Messsignalanschluss gemäß dem Prinzip der Eigenkapazität erfolgt, der Referenzanschluss also ein definiertes, bevorzugt konstantes und besonders bevorzugt ein dem Massepotential entsprechendes Potential aufweist. Der Neutralanschluss weist vorzugsweise einen Potentialverlauf auf, der im zeitlichen Mittel um weniger als 20%, bevorzugt um weniger als 10%, besonders bevorzugt um weniger als 5% vom Potentialverlauf des Messsignalanschlusses abweicht.

Eine weitere bevorzugt Ausführungsform sieht vor, dass zumindest innerhalb eines Zeitabschnittes die Messung der Kapazität am Messsignalanschluss gemäß dem Prinzip der Gegenkapazität erfolgt. Dies bedeutet, dass der Referenzsignalanschluss einen aktiv erzeugten definierten, bevorzugt periodischen, besonders bevorzugt rechteckigen Potentialverlauf aufweist und der Neutralsignalanschluss ein definiertes, bevorzugt konstantes, besonders bevorzugt ein dem Massepotential entsprechendes Potential aufweist. Die Frequenz des Potentialverlaufes am Referenzsignalanschluss liegt dabei höher, bevorzugt um mindestens einen Faktor 100 höher als die maximal erwartbare Frequenz der Kapazitätsänderung zwischen Neutral- und Messelektroden, z.B. durch Verformung des dazwischenliegenden Dielektrikums, so dass die jeweils induzierten Ladungsverschiebungen am Messsignalanschluss unterscheidbar bleiben.

Es ist bevorzugt, dass durch die zeitlich variable Zuordnung der Elektroden zu den Signalanschlüssen der Messeinheit nacheinander gleiche Messgrößen an unterschiedlichen Orten des Sensorsystems als Ortsauflösung oder unterschiedliche Messgrößen am gleichen Ort des Sensorsystems als Multimodalität aufgenommen werden.

Eine weitere bevorzugte Ausführungsform sieht vor, dass in einem definierten Zeitintervall das Messsignal an einer Elektrode, das Referenzsignal an einer anderen Elektrode und das Neutralsignal an allen anderen Elektroden angelegt werden.

Es ist bevorzugt, dass nach Ablauf des Zeitintervalls in einem weiteren Zeitintervall das Messsignal an einer anderen Elektrode als zuvor und/oder das Referenzsignal an einer anderen Elektrode als zuvor und das Neutralsignal an allen übrigen Elektroden angelegt wird.

Weiter ist bevorzugt, dass die gemessene Kapazitätsänderung durch eine Verformung des dielektrischen Körpers durch Druckkraft/-spannung, Scherkraftspannung, Zugkraft/-spannung oder durch die Annäherung eines elektrisch leitfähigen oder polarisierbaren Körpers an das Sensorsystem erzeugt wird und damit unterschiedliche Messgrößen aufgenommen werden können.

Weiterhin ist es bevorzugt, dass durch die Messung eine der folgenden Merkmale des Sensorsystems beeinflusst wird:
- Gesamtoberfläche einer Elektrode
- Änderung der Überlappungsfläche oder der Orthogonalprojektion einer Fläche einer Elektrode auf die Fläche einer anderen Elektrode
- Abstand zwischen zwei Elektroden
- Elektrische Eigenschaften des Dielektrikums, insbesondere die Permittivität

Die beschriebenen erfindungsgemäßen Sensorsysteme können auf Grund ihrer flexiblen und dehnbaren Beschaffenheit sowie der Fähigkeit zur multimodalen und/oder ortsselektiven Messung in zahlreichen Anwendungen eingesetzt werden. Dazu zählen:
1. Industrie
   - Sensoren zur Prozessüberwachung, z.B. in Greifern
   - Mensch-Maschine-Schnittstellen auf beliebigen Oberflächen
   - Kollisionsprävention und -erkennung, z.B. Roboter-Sensorhaut
2. Automobil
   - Bedienelemente auf gekrümmten Oberflächen, z.B. Armaturenbrett
   - Überwachung der Insassen, z.B. durch Sitzsensorik
   - Kollisionsprävention und -erkennung, z.B. im Dichtungsgummi von Türen und Fenstern
3. Medizin
   - Überwachung von auf den Menschen einwirkenden Kräften
   - Erfassung von Gelenkstellung
   - Messung von Atmung, Herzschlag, etc.
4. Sport und Freizeit
   - Robuste, mehrdimensionale Eingabeinstrumente z.B. für Spielekonsolen
   - Bedienelemente auf Möbelstücken, z.B. Multimedia-Steuerung in Sofaarmlehne

Anhand der nachfolgenden Figuren und Beispiele werden verschiedene Ausführungsformen der Erfindung näher beschrieben, ohne diese auf die hier gezeigten spezifischen Formen einzuschränken.
- Fig. 1: zeigt schematisch den Aufbau eines exemplarischen Sensorsystems bestehend aus dielektrischem Körper, Elektroden, Kapazitätsmesseinheit und Multiplexer
- Fig. 2: zeigt eine schematische Schnittdarstellung des Aufbaus einer Variante eines beispielhaften nicht erfindungsgemäßen Sensorsystems als Drucksensor mit insensitiver elastischer Zuleitung
- Fig. 3: zeigt eine schematische Schnittdarstellung des Aufbaus einer Variante eines beispielhaften nicht erfindungsgemäßen Sensorsystems als kombinierter Näherungs-, Druck- und Dehnungssensor
- Fig. 4: zeigt eine schematische Schnittdarstellung (a) und eine 3D-Projektion (b) des Aufbaus einer Variante eines beispielhaften nicht erfindungsgemäßen Sensorsystems als kombinierter 3D-Kraft-, 3D-Näherungs- und Dehnungssensor sowie eine schematische Schnittdarstellung des durch eine anliegende Kraft ausgelenkten Sensors (c)
- Fig. 5: zeigt eine schematische Schnittdarstellung (a) und eine 3D-Projektion (b) des Aufbaus einer Variante eines erfindungsgemäßen Sensorsystems als kombinierter 3D-Kraft- und 3D-Näherungssensor sowie eine schematische Schnittdarstellung des durch eine anliegende Kraft ausgelenkten Sensors (c)
- Fig. 6: zeigt eine schematische Schnittdarstellung (a) und eine 3D-Projektion (b) des Aufbaus einer Variante eines beispielhaften nicht erfindungsgemäßen Sensorsystems als ortsaufgelöster, kombinierter Druck- und Dehnungssensor
- Fig. 7: zeigt schematisch den Aufbau einer Variante eines beispielhaften nicht erfindungsgemäßen Sensorsystems als ortsaufgelöster, 3D-Kraft-, Näherungs- und Dehnungssensor

### Beispiel 1

### Drucksensor mit insensitiver elastischer Sensorzuleitung

Die bislang ungeschirmte oder durch ein unelastisches Koaxialkabel realisierte Zuleitung zur Messelektrode eines dielektrischen Elastomersensors kann nun durch Verwendung einer umgebenden messtechnisch neutralen Schirmungsschicht selbst elastisch sein. Es ist also möglich, Sensor und Zuleitung nahtlos innerhalb desselben Prozesses aus Elastomeren zu fertigen, indem Mess- und Referenzelektrode innerhalb der Zuleitung durch eine neutrale Schicht voneinander abgeschirmt werden und erst innerhalb des gewünschten sensitiven Bereichs ungeschirmt überlappende Flächen aufweisen. Fig. 2 zeigt einen einfachen, vollgeschirmten elastomeren Drucksensor mit elastischer Zuleitung bestehend aus dielektrischen Schichten (2a-b=K, 4a-d=I) und Elektroden (1ab=R, 3=M, 5a-b=N). Durch den beschriebenen Aufbau gehen Deformationen (Dehnung, Quetschung, etc.) nur im Bereich 6b in die Messung ein, nicht hingegen im Bereich 6a.

### Beispiel 2

### Kombinierter Näherungs-, Druck und Dehnungssensor

Der in Fig. 3 gezeigte Aufbau besteht aus drei Elektrodenschichten (1, 3, 5) und zwei dielektrischen Schichten (2=K, 4=I). Schicht 2 ist dabei isotrop-volumenkompressibel (K), Schicht 4 hingegen volumeninkompressibel (I). Die Elektroden sind für verschiedene Messmodi variabel beschaltbar (s. Tab. 1). Da keine zirkulären Abhängigkeiten zwischen den Modi bestehen, können diese in der Nachverarbeitung direkt aufgelöst werden.

**Tab. 1**

| Modus / Elektrode | 1 | 3 | 5 | Abhängigkeit |
|---|---|---|---|---|
| Dehnung | N | M | R | - |
| Druck | R | M | N | Dehnung |
| Näherung | M | N | R | Dehnung, Druck |

### Beispiel 3

### Kombinierter 3D-Kraft-, 3D-Näherungs- und Dehnungssensor

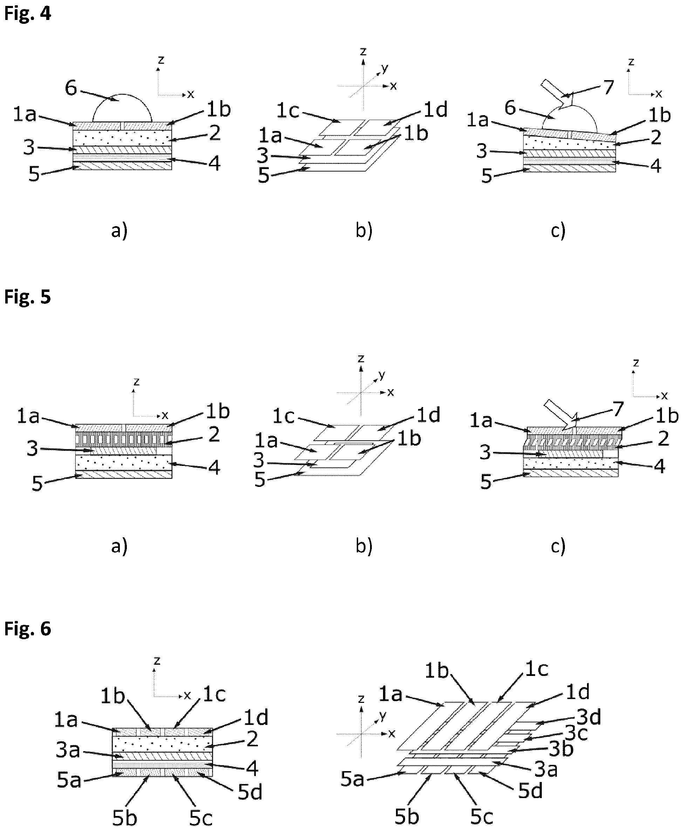

In Fig. 4 ist ein kombinierter 3D-Näherungs-, 3D-Kraft- und Dehnungssensor mit Elektrodenschichten (1, 3, 5), dielektrischen Schichten (2=K, 4=I) sowie einer als Hebel bzw. Kraftumformer wirkenden Halbkugel (6=I) dargestellt. Schicht 2 ist dabei isotrop-volumenkompressibel (K), Schicht 4 und Kraftumformer 6 hingegen volumeninkompressibel (I). Durch die Unterteilung der Elektrode 1 in jeweils 4 Segmente (prinzipiell genügen auch 3 Segmente) lassen sich im Gegensatz zum im Beispiel 1 dargestellten System auch die Richtung der komprimierenden Kraft und des sich nähernden Objektes ermitteln (s. Tab. 2). Im Falle eines sich nähernden Objektes gelingt dies durch die unterschiedliche Entfernung der Elektroden (1a-d) zum Objekt, sofern dies nicht genau über der Sensormitte zentriert ist, und der damit einhergehenden unterschiedlichen Kapazitäten. Mittels geeigneter mathematischer Umformungen (abhängig vom konkreten Sensoraufbau) lässt sich die Position aus den Kapazitäten (C1-4) ermitteln.

Im Falle eines 3D-Kraftvektors (7), der an der Spitze des halbkugelförmigen Kraftumwandlers (6) ansetzt, wirkt sich dessen Z-Komponente (Normalkraft) im in Fig. 4 gezeigten Aufbau symmetrisch auf die Druckverteilung im Sensor aus, während durch die Hebelwirkung die X-Komponente zu einer Asymmetrie bezüglich der Y-Achse und die Y-Komponente zu einer Asymmetrie bezüglich der X-Achse führt (Scherkraft, s. Fig. 4 c). Mittels geeigneter mathematischer Umformungen (abhängig vom konkreten Sensoraufbau) lassen sich die einzelnen Komponenten der Kraft aus den Kapazitäten (C5-8) ermitteln.

Die Dehnung des Gesamtaufbaus kann aus der Kapazität (C9) ermittelt werden.

**Tab. 2**

| Modus / Elektrode | 1a | 1b | 1c | 1d | 3 | 5 | Abhängigkeit |
|---|---|---|---|---|---|---|---|
| Näherung C1 | M | N | N | N | N | N | Dehnung, Kraft |
| Näherung C2 | N | M | N | N | N | N | Dehnung, Kraft |
| Näherung C3 | N | N | M | N | N | N | Dehnung, Kraft |
| Näherung C4 | N | N | N | M | N | N | Dehnung, Kraft |
| Kraft C5 | R | N | N | N | M | N | Dehnung |
| Kraft C6 | N | R | N | N | M | N | Dehnung |
| Kraft C7 | N | N | R | N | M | N | Dehnung |
| Kraft C8 | N | N | N | R | M | N | Dehnung |
| Dehnung C9 | N | N | N | N | M | R | - |

### Beispiel 4

### Kombinierter 3D-Kraft- und 3D-Näherungssensor

In Fig. 5 ist ein kombinierter 3D-Näherungs-, 3D-Kraftsensor mit Elektrodenschichten (1, 3, 5) und dielektrischen Schichten (2=V, 4=K) dargestellt. Schicht 4 ist dabei isotrop-volumenkompressibel (K), Schicht 2 hingegen anisotropvolumenkompressibel (V). Durch die Unterteilung der Elektroden 1 in jeweils 4 Segmente (prinzipiell genügen auch 3 Segmente) lässt sich analog zum vorherigen System die Position eines sich nähernden Objektes ermitteln (s. Tab. 3). Im Falle eines 3D-Kraftvektors (7) wirkt sich lediglich dessen Z-Komponente (Normalkraft) auf die Kapazität C9 aus, während die X-Komponente zu einer Asymmetrie der Elektrodenflächenüberlappung zwischen den Elektroden 1 und 3 bezüglich der Y-Achse und die Y-Komponente zu einer Asymmetrie bezüglich der X-Achse führt (Scherkraft, s. Fig. 5 c). Diese Komponenten bestimmen damit maßgeblich die Kapazitäten (C5-C8). Mittels geeigneter mathematischer Umformungen (abhängig vom konkreten Sensoraufbau) lassen sich die einzelnen Komponenten der Kraft aus den Kapazitäten (C5-9) ermitteln. Im Gegensatz zu Beispiel 3 wird hierbei davon ausgegangen, dass die Kraft nicht punktuell, sondern flächig auf die Sensoroberfläche wirkt.

**Tab. 3**

| Modus / Elektrode | 1a | 1b | 1c | 1d | 3 | 5 | Abhängigkeit |
|---|---|---|---|---|---|---|---|
| Näherung C1 | M | N | N | N | N | N | Kraft |
| Näherung C2 | N | M | N | N | N | N | Kraft |
| Näherung C3 | N | N | M | N | N | N | Kraft |
| Näherung C4 | N | N | N | M | N | N | Kraft |
| Scherkraft C5 | R | N | N | N | M | N | Normalkraft |
| Scherkraft C6 | N | R | N | N | M | N | Normalkraft |
| Scherkraft C7 | N | N | R | N | M | N | Normalkraft |
| Scherkraft C8 | N | N | N | R | M | N | Normalkraft |
| Normalkraft C9 | N | N | N | N | M | R | - |

### Beispiel 5

### Ortsaufgelöster, kombinierter Druck- und Dehnungssensor

In Fig. 6 ist ein ortsaufgelöster, kombinierter Druck- und Dehnungssensor dargestellt. Dieser besteht aus den Elektrodenschichten (1a-d, 3a-d, 5a-d) sowie den dielektrischen Schichten (2=K, 4=I). Mit den in Tab. 4 dargestellten Elektrodenbeschaltungen lässt sich sowohl zwischen Druck- und Dehnungsmessung variieren als auch die aktive Subfläche des Sensors wählen. Wird beispielsweise M=(3b) und R=(1c) selektiert und alle verbliebenen Elektroden (1a, 1b, 1d, 3a, 3c, 3d, 5a-d) neutral (N) geschaltet, wird nur der Druck im Überlappungsbereich zwischen (3b) und (1c) erfasst (ein aktiver DrucksensorPixel). Wird M=(3b, 3c) und R=(5b, 5c) selektiert und alle verbliebenen Elektroden (1a-d, 3a, 3d, 5a, 5d) neutral (N) geschaltet, wird nur die Dehnung im Überlappungsbereich zwischen (3b, 3c) und (5b, 5c) erfasst (vier aktive Dehnungssensor-Pixel). Wird hingegen M=(3a-d) und R=(1a-d) selektiert und N=(5a-d) angewendet, ist die gesamte Sensorfläche drucksensitiv (16 aktive Drucksensorpixel).

**Tab. 4**

| **Modus / Elektrode** | **1 [s]** | **1 [n]** | **1 [a]** | **3 [s]** | **3 [n]** | **3 [a]** | **5 [s]** | **5 [n]** | **5 [a]** |
|---|---|---|---|---|---|---|---|---|---|
| Dehnung | - | - | N | M | N | - | R | N | - |
| Druck | R | N | - | M | N | - | - | - | N |

| | | | | | | | | | |
|---|---|---|---|---|---|---|---|---|---|
| [s]: Für die aktuelle Messung selektierte Elektroden der betreffenden Schicht [n]: Übrige, nicht selektierte Elektroden der betreffenden Schicht [a]: Alle Elektroden der betreffenden Schicht | | | | | | | | | |

### Beispiel 6

### Ortsaufgelöster, kombinierter 3D-Kraft, Näherungs- und Dehnungssensor

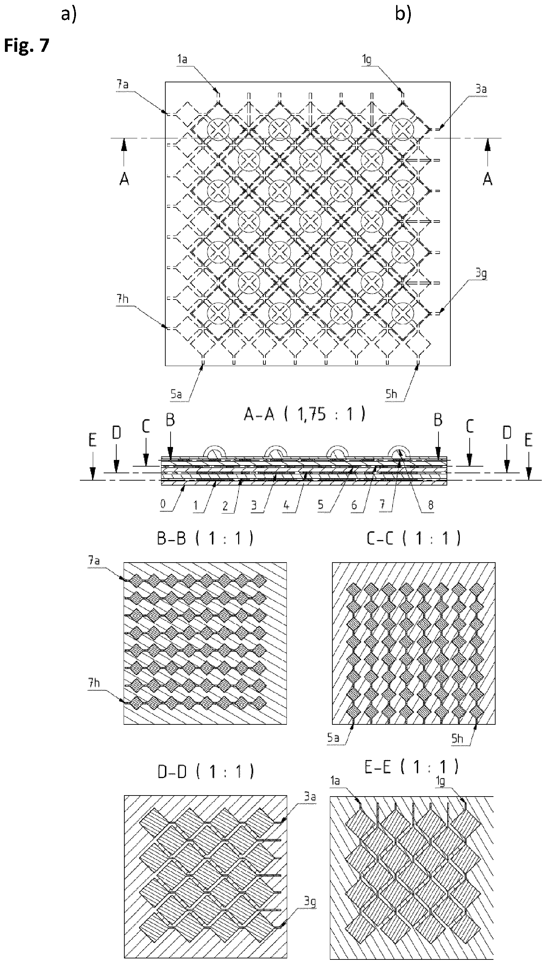

Fig. 7 zeigt eine ortsaufgelöste Variante des in Fig. 4 gezeigten Sensors mit Elektroden (1a-g, 3a-g, 5a-h, 7a-h), Dielektrika (0=I, 2=I, 4=K, 6=I) und Kraftumformer (8=I). Die Näherung wird an den Kreuzungspunkten einer oder mehrerer selektierter Elektroden aus Schicht 5 und 7 erfasst (s. Tab. 5). Durch die Wahl der dielektrischen Schicht 4 als isotrop-volumenkompressibel kann ebenso der Druck durch die Kapazität zwischen einer Elektrode aus Schicht 3 und einer der 4 überlappenden Elektroden aus Schicht 5 oder 7 gemessen werden. Aus den 4 einzelnen Druckwerten kann analog wie zuvor geschildert die X- Y- und Z-Komponente einer auf die Spitze des Kraftumformers wirkenden Kraft berechnet werden. Durch die Wahl der dielektrischen Schicht 2 als elastisch-volumeninkompressibel kann zudem die Dehnung durch Messung der Kapazität zwischen einer oder mehreren selektierten Elektroden aus Schicht 1 und 3 bestimmt werden.

**Tab. 5**

| **Modus / Elektrode** | **1 [s]** | **1 [n]** | **1 [a]** | **3 [s]** | **3 [n]** | **3 [a]** | **5 [s]** | **5 [n]** | **5 [a]** | **7 [s]** | **7 [n]** | **7 [a]** |
|---|---|---|---|---|---|---|---|---|---|---|---|---|
| Näherung | - | - | N | - | - | N | R | N | - | M | N | - |
| Druck/Kraft | - | - | N | M | N | - | R | N | - | R | N | - |
| Dehnung | R | N | - | M | N | - | - | - | N | | | N |

| | | | | | | | | | | | | |
|---|---|---|---|---|---|---|---|---|---|---|---|---|
| [s]: Für die aktuelle Messung selektierte Elektroden der betreffenden Schicht [n]: Übrige, nicht selektierte Elektroden der betreffenden Schicht [a]: Alle Elektroden der betreffenden Schicht | | | | | | | | | | | | |

Die ausgeführten Varianten sind auch untereinander kombinierbar. So ist die elastische, geschirmte Zuleitung in Beispiel 1 auch für die nachfolgenden komplexeren Sensoren geeignet. Ebenso können je vier Messpixel aus dem Matrix-Aufbau zu einer ortsaufgelösten Variante des 3D-Kraftsensors genutzt werden. Der Matrix-Aufbau mit ortsaufgelöster Näherungssensorschicht kann auch mit dem auf Flächenversatz beruhenden 3D-Kraftsensor kombiniert werden. Die gezeigten Aufbauten müssen nicht zwingend planar sein, sondern können sich beispielsweise auch auf der Mantelfläche eines zylindrischen Elastomerbauteils befinden. Wenn sich zwischen einer Elektrode und der/den aktuelle/aktuellen Messelektrode/Messelektroden auf gesamter Fläche eine oder mehrere Neutralelektroden befinden, kann diese Elektrode i.d.R. wahlweise Neutralelektrode (N), Referenzelektrode (R) oder unverbunden sein ohne die Charakteristik des Messmodus zu verändern. In den ausgeführten Beispielen ist der Übersicht wegen jeweils nur eine der Möglichkeiten beschrieben.

## Patentansprüche

1. Kapazitives Sensorsystem enthaltend
a. mindestens einen dielektrischen Körper (0, 2, 4, 6, 8, 2a-b, 4a-d), der mindestens ein Elastomer enthält oder daraus besteht,
b. mindestens zwei elektrisch voneinander isolierte Elektroden (1, 3, 5, 1a-g, 3a-g, 5a-h, 7a-h) mit separaten elektrischen Anschlüssen, wobei die Elektroden (1, 3, 5, 1a-g, 3a-g, 5a-h, 7a-h) aus elastischen Materialien aufgebaut sind und leitfähige Partikel enthalten,
c. mindestens eine Kapazitäts-Messeinheit (12), die jeweils folgende Signalanschlüsse (12a-c) aufweist:
i. Messsignal-Anschluss (12a-c) zur Erfassung des Ladungsflusses von/zu den damit verbundenen Elektroden (1, 3, 5, 1a-g, 3a-g, 5a-h, 7a-h), die als Messelektroden während der Messung fungieren,
ii. Referenzsignal-Anschluss (12a-c) mit vorgegebenem Potentialverlauf, wobei die mit dem Referenzsignal-Anschluss (12a-c) verbundenen Elektroden (1, 3, 5, 1a-g, 3a-g, 5a-h, 7a-h) als Referenzelektroden für die Messung der Kapazität der Messelektroden fungieren, indem die Potentialdifferenzen zwischen Referenz- und Messelektroden einen Ladungsfluss am Messsignal-Anschluss verursachen
iii. Neutralsignal-Anschluss (12a-c) mit vorgegebenem Potentialverlauf, wobei die Kapazität(en) der Messelektroden bezüglich der mit dem Neutralsignal-Anschluss (12a-c) verbundenen Elektroden (1, 3, 5, 1a-g, 3a-g, 5a-h, 7a-h) als Neutralelektroden in Verbindung mit den vorliegenden Potentialdifferenzen zwischen Mess- und Neutralelektroden keinen Beitrag zum am Messsignal-Anschluss (12a-c) erfassten Ladungsfluss leisten oder deren Beitrag deutlich vom Beitrag der Kapazitäten zwischen Referenz- und Messelektroden unterscheidbar ist
d. mindestens einen Multiplexer (10) zur zeitlich veränderbaren Schaltung der Elektroden (1, 3, 5, 1a-g, 3a-g, 5a-h, 7a-h) mit den Signalanschlüssen (12a-c) der Messeinheit(en) (12) in verschiedenen Messkonfigurationen, wobei eine Messkonfiguration die Zuordnung von Elektroden des Sensorsystems zu einem Signalanschluss (12a-c) realisiert,
wobei der mindestens eine dielektrische Körper (0, 2, 4, 6, 8, 2a-b, 4a-d) und die Elektroden (1, 3, 5, 1a-g, 3a-g, 5a-h, 7a-h) um mehr als 5% elastisch dehnbar sind,
wobei der mindestens eine dielektrische Körper (0, 2, 4, 6, 8, 2a-b, 4a-d) aus mehreren dielektrischen Schichten besteht, und
wobei der mindestens eine dielektrische Körper (0, 2, 4, 6, 8, 2a-b, 4a-d) anisotrope Hohlräume enthält.

2. Kapazitives Sensorsystem nach Anspruch 1,
**dadurch gekennzeichnet, dass** das Sensorsystem mindestens drei elektrisch voneinander isolierte Elektroden (1, 3, 5, 1a-g, 3a-g, 5a-h, 7a-h) mit separaten elektrischen Anschlüssen aufweist.

3. Kapazitives Sensorsystem nach einem der Ansprüche 1 oder 2,
**dadurch gekennzeichnet, dass** im Zeitpunkt einer Messung jeder Signalanschluss (12a-c) der kapazitiven Messeinheit (12) mit mindestens einer Elektrode (1, 3, 5, 1a-g, 3a-g, 5a-h, 7a-h) verbunden ist.

4. Kapazitives Sensorsystem nach einem der Ansprüche 1 bis 3,
**dadurch gekennzeichnet, dass** die Messkonfigurationen der Zuordnung der Elektroden (1, 3, 5, 1a-g, 3a-g, 5a-h, 7a-h) des Sensorsystems zu den Anschlüssen der Messeinheit (12) zeitlich variabel über die Betriebszeit sind.

5. Kapazitives Sensorsystem nach einem der Ansprüche 1 bis 4,
**dadurch gekennzeichnet, dass** im Zeitpunkt der Messung die Messelektrode im Bereich der Zuleitung (9a-c) durch mindestens eine Neutralelektrode zumindest bereichsweise umgeben ist, so dass der Zuleitungsbereich die Messung nicht beeinflusst.

6. Kapazitives Sensorsystem nach einem der Ansprüche 1 bis 5,
**dadurch gekennzeichnet, dass** die Kapazitäts-Messeinheit (12) Mittel zur Verstimmung eines Schwingkreises oder einen kapazitiven Spannungsteiler zur Messung der Kapazität aufweist, insbesondere zur Erfassung einer Ladezeit, eines Ladungstransfers oder Anwendung eines Delta-Sigma-Modulators.

7. Kapazitives Sensorsystem nach einem der Ansprüche 1 bis 6,
**dadurch gekennzeichnet, dass** der mindestens eine dielektrische Körper (0, 2, 4, 6, 8, 2a-b, 4a-d) die Form eines flächigen Gebildes mit in einer Dimension geringeren Abmessungen als in den anderen beiden Dimensionen, insbesondere eine Folie, aufweist.

8. Kapazitives Sensorsystem nach einem der Ansprüche 1 bis 7,
**dadurch gekennzeichnet, dass** die leitfähigen Partikel Kohlenstoff und/oder Metalle enthalten oder daraus bestehen.

9. Kapazitives Sensorsystem nach einem der Ansprüche 1 bis 8,
**dadurch gekennzeichnet, dass** das Elastomer im dielektrischen Körper (0, 2, 4, 6, 8, 2a-b, 4a-d) und/oder in den Elektroden (1, 3, 5, 1a-g, 3a-g, 5a-h, 7a-h) ein Material aus der Gruppe bestehend aus Silicon, Fluorsilicon, Polyurethan (PUR), Polynorbornen, Naturkautschuk (NR), Styrol-Butadien (SBR), Isobutylen-Isopren (IIR), Ethylen-Propylen-Dien-Terpolymer (EPDM/EPM), Poly-Chlorbutadien (CR), chlorsulfoniertem Polyethylen (CSM), Acrylnitril-Butadien (NBR), hydriertem Acrylnitril-Butadien (HNBR), Fluorkautschuk, thermoplastischen Elastomeren, insbesondere thermoplastischen Styrol-Copolymeren, bevorzugt ausgewählt aus der Gruppe bestehend aus Styrol-Butadien-Styrol- (SBS-), Styrol-Ethylen-Butadien-Styrol- (SEBS-), Styrol-Ethylen-Propylen-Styrol-(SEPS-), Styrol-Ethylen-Ethylen-Propylen-Styrol- (SEEPS-), Styrol-Isopren-Styrol- (SIS-) und Kombinationen hiervon, teilvernetzten Blends auf Polyolefin-Basis, bevorzugt ausgewählt Ethylen-Propylen-Dien-Kautschuken und Polypropylen (EPDM/PP), Nitril-Butadien-Kautschuk und Polypropylen (NBR/PP) sowie aus Ethylen-Propylen-Dien-Kautschuk und Polyethylen (EPDM/PE), thermoplastische Urethan-Copolymere, bevorzugt ausgewählt aus Copolymeren mit aromatischem Hartsegment und Ester-Weichsegment (TPU-ARES), aromatischem Hartsegment und Ether-Weichsegment (TPU-ARET) und aromatischem Hartsegment und Ester/Ether-Weichsegment (TPU-AREE) sowie Mischungen der genannten Elastomermaterialien enthält oder hieraus besteht.

10. Kapazitives Sensorsystem nach einem der Ansprüche 1 bis 9,
**dadurch gekennzeichnet, dass** der mindestens eine dielektrische Körper (0, 2, 4, 6, 8, 2a-b, 4a-d) und die Elektroden (1, 3, 5, 1a-g, 3a-g, 5a-h, 7a-h) um mehr als 10% und besonders bevorzugt um mehr als 15% elastisch dehnbar sind.

11. Verfahren zur multimodalen und/oder ortsselektiven Messung von Kräften, Verformungen und/oder Objekt-Näherung mit einem kapazitivem Sensorsystem nach einem der Ansprüche 1 bis 10.

12. Verfahren nach Anspruch 11,
**dadurch gekennzeichnet, dass** zumindest innerhalb eines Zeitabschnittes die Messung der Kapazität am Messsignalanschluss (12a-c) gemäß dem Prinzip der Eigenkapazität erfolgt, der Referenzanschluss (12a-c) also ein definiertes, bevorzugt konstantes und besonders bevorzugt ein dem Massepotential entsprechendes Potential aufweist und der Neutralanschluss (12a-c) einen Potentialverlauf aufweist, der im zeitlichen Mittel um weniger als 20%, bevorzugt um weniger als 10%, besonders bevorzugt um weniger als 5% vom Potentialverlauf des Messsignalanschlusses (12a-c) abweicht.

13. Verfahren nach Anspruch 11 oder 12,
**dadurch gekennzeichnet, dass** zumindest innerhalb eines Zeitabschnittes die Messung der Kapazität am Messsignalanschluss (12a-c) gemäß dem Prinzip der Gegenkapazität erfolgt, der Referenzsignalanschluss (12a-c) also einen aktiv erzeugten definierten, bevorzugt periodischen, besonders bevorzugt rechteckigen Potentialverlauf aufweist und der Neutralsignalanschluss (12a-c) ein definiertes, bevorzugt konstantes, besonders bevorzugt ein dem Massepotential entsprechendes Potential aufweist, wobei die Frequenz des Potentialverlaufes am Referenzsignalanschluss (12a-c) dabei höher liegt, bevorzugt um mindestens um einen Faktor 100 höher als die maximal erwartbare Frequenz der Kapazitätsänderung zwischen Neutral- und Messelektroden

14. Verfahren nach einem der Ansprüche 11 bis 13,
**dadurch gekennzeichnet, dass** durch die zeitlich variable Zuordnung der Elektrodenschichten (1, 3, 5, 1a-g, 3a-g, 5a-h, 7a-h) zu den Signalanschlüssen (12a-c) der Messeinheit (12) nacheinander gleiche Messgrößen an unterschiedlichen Orten des Sensorsystems als Ortsauflösung oder unterschiedliche Messgrößen am gleichen Ort des Sensorsystems als Multimodalität aufgenommen werden.

15. Verfahren nach einem der Ansprüche 11 bis 14,
**dadurch gekennzeichnet, dass** in einem definierten Zeitintervall das Messsignal an einer Elektrode (1, 3, 5, 1a-g, 3a-g, 5a-h, 7a-h), das Referenzsignal an einer anderen Elektrode (1, 3, 5, 1a-g, 3a-g, 5a-h, 7a-h) und das Neutralsignal an allen anderen Elektroden (1, 3, 5, 1a-g, 3a-g, 5a-h, 7a-h) angelegt wird.

16. Verfahren nach einem der Ansprüche 11 bis 15,
**dadurch gekennzeichnet, dass** nach Ablauf des Zeitintervalls in einem weiteren Zeitintervall das Messsignal an einer anderen Elektrode (1, 3, 5, 1a-g, 3a-g, 5a-h, 7a-h) als zuvor und/oder das Referenzsignal an einer anderen Elektrode (1, 3, 5, 1a-g, 3a-g, 5a-h, 7a-h) als zuvor und das Neutralsignal an allen übrigen Elektroden (1, 3, 5, 1a-g, 3a-g, 5a-h, 7a-h) angelegt wird.

17. Verfahren nach einem der Ansprüche 11 bis 16,
**dadurch gekennzeichnet, dass** die gemessene Kapazitätsänderung durch eine Verformung des mindestens einen dielektrischen Körpers (0, 2, 4, 6, 8, 2a-b, 4a-d) durch Druckkraft/-spannung, Scherkraftspannung, Zugkraft/-spannung oder durch die Annäherung eines elektrisch leitfähigen oder polarisierbaren Körpers an das Sensorsystem erzeugt wird und damit unterschiedliche Messgrößen aufgenommen werden können.

## Claims

1. Capacitive sensor system comprising
a) at least one dielectric body (0, 2, 4, 6, 8, 2a-b, 4a-d) comprising or consisting of at least one elastomer,
b) at least two electrodes (1, 3, 5, 1a-g, 3a-g, 5a-h, 7a-h) being electrically insulated from each other and having separate electrical terminals, wherein the electrodes (1, 3, 5, 1a-g, 3a-g, 5ah, 7a-h) are made of elastic materials and comprise conductive particles,
c) at least one capacitance measuring unit (12), which has each of the following signal terminals (12a-c):
i. a measuring signal terminal (12a-c) for detecting the charge flow from/to the electrodes (1, 3, 5, 1a-g, 3a-g, 5ah, 7a-h) connected to it, which act as measuring electrodes during the measurement,
ii. a reference signal terminal (12a-c) with a predetermined potential curve, the electrodes (1, 3, 5, 1a-g, 3a-g, 5a-h, 7a- h) connected to the reference signal terminal (12a-c) acting as reference electrodes for measuring the capacitance of the measuring electrodes, in that the potential differences between reference and measuring electrodes cause a charge flow at the measuring signal terminal,
iii. a neutral signal terminal (12a-c) with a predetermined potential curve, wherein the capacitance(s) of the measuring electrodes with respect to the electrodes (1, 3, 5, 1a-g, 3a-g, 5a-h, 7a-h) connected to the neutral signal terminal (12a-c) as neutral electrodes in conjunction with the existing potential differences between the measuring and neutral electrodes make no contribution to the charge flow detected at the measuring signal terminal (12a-c) or their contribution can be clearly distinguished from the contribution of the capacitances between the reference and measuring electrodes,
d) at least one multiplexer (10) for time-variable switching of the electrodes (1, 3, 5, 1a-g, 3a-g, 5a-h, 7a-h) with the signal terminals (12a-c) of the measuring unit(s) (12) in different measuring configurations, wherein a measuring configuration realizes the assignment of electrodes of the sensor system to a signal terminal (12a-c),
wherein the at least one dielectric body (0, 2, 4, 6, 8, 2a-b, 4a-d) and the electrodes (1, 3, 5, 1a-g, 3a-g, 5a-h, 7a-h) are elastically extensible by more than 5%,
wherein the at least one dielectric body (0, 2, 4, 6, 8, 2a-b, 4a-d) consists of several dielectric layers, and
wherein the at least one dielectric body (0, 2, 4, 6, 8, 2a-b, 4a-d) includes anisotropic cavities.

2. Capacitive sensor system according to claim 1,
**characterised in that** the sensor system has at least three electrodes (1, 3, 5, 1a-g, 3a-g, 5a-h, 7a-h) which are electrically insulated from each other and have separate electrical terminals.

3. Capacitive sensor system according to any one of claims 1 or 2,
**characterized in that**, at the time of a measurement, each signal terminal (12a-c) of the capacitive measuring unit (12) is connected to at least one electrode (1, 3, 5, 1a-g, 3a-g, 5a-h, 7a-h).

4. Capacitive sensor system according to any one of claims 1 to 3,
**characterized in that** the measuring configurations of the assignment of the electrodes (1, 3, 5, 1a-g, 3a-g, 5a-h, 7a-h) of the sensor system to the terminals of the measuring unit (12) are variable in time over the operating time.

5. Capacitive sensor system according to any one of claims 1 to 4,
**characterized in that**, at the time of measurement, the measuring electrode is surrounded at least in sections by at least one neutral electrode in the area of the supply line (9a-c), so that the supply line area does not affect the measurement.

6. Capacitive sensor system according to any one of claims 1 to 5,
**characterized in that** the capacitance measuring unit (12) has means for detuning a resonant circuit or a capacitive voltage divider for measuring the capacitance, in particular for detecting a charging time, a charge transfer or application of a delta-sigma modulator.

7. Capacitive sensor system according to any one of claims 1 to 6,
**characterized in that** the at least one dielectric body (0, 2, 4, 6, 8, 2a-b, 4a-d) has the shape of a flat structure with smaller dimensions in one dimension than in the other two dimensions, in particular a foil.

8. Capacitive sensor system according to any one of claims 1 to 7,
**characterized in that** the conductive particles comprise or consist of carbon and/or metals.

9. Capacitive sensor system according to any one of claims 1 to 8,
**characterized in that** the elastomer in the dielectric body (0, 2, 4, 6, 8, 2a-b, 4a-d) and/or in the electrodes (1, 3, 5, 1a-g, 3a-g, 5a-h, 7a-h) comprises or consists of a material from the group consisting of silicone, fluorosilicone, polyurethane (PUR), polynorbornene, natural rubber (NR), styrene-butadiene (SBR), isobutylene-isoprene (IIR), ethylene-propylene-diene terpolymer (EPDM/EPM), polychlorobutadiene (CR), chlorosulfonated polyethylene (CSM), acrylonitrile-butadiene (NBR), hydrogenated acrylonitrile-butadiene (HNBR), fluororubber, thermoplastic elastomers, in particular thermoplastic styrene copolymers, perferably selected from the group consisting of styrene-butadiene-styrene (SBS), styrene-ethylene-butadiene-styrene (SEBS), styrene-ethylene-propylene-styrene (SEPS), styrene-ethylene-ethylene-propylene-styrene (SEEPS), styrene-isoprene-styrene (SIS), and combinations thereof, partially cross-linked polyolefin-based blends, preferably selected from ethylene-propylene-diene rubbers and polypropylene (EPDM/PP), nitrile-butadiene rubber and polypropylene (NBR/PP) as well as from ethylene-propylene-diene rubber and polyethylene (EPDM/PE), thermoplastic urethane copolymers, preferably selected from copolymers with aromatic hard segment and ester soft segment (TPU-ARES), aromatic hard segment and ether soft segment (TPU-ARET) and aromatic hard segment and ester/ether soft segment (TPU-AREE) and mixtures of said elastomer materials.

10. Capacitive sensor system according to any one of claims 1 to 9,
wherein the at least one dielectric body (0, 2, 4, 6, 8, 2a-b, 4a-d) and the electrodes (1, 3, 5, 1a-g, 3a-g, 5a-h, 7a-h) are elastically extensible by more than 10%, and preferably by more than 15 %.

11. Method for multimodal and/or position-selective measurement of forces, deformations and/or object approaching, using a capacitive sensor system according to one of claims 1 to 10.

12. Method according to claim 11,
**characterized in that**, at least within a time period, the measurement of the capacitance at the measurement signal terminal (12a-c) is carried out according to the principle of intrinsic capacitance, the reference terminal (12a-c) thus having a defined, preferably constant, potential, and particularly preferably a potential corresponding to the ground potential, and the neutral terminal (12a-c) having a potential curve which deviates on average over time by less than 20%, preferably by less than 10%, particularly preferably by less than 5% from the potential curve of the measurement signal terminal (12a-c).

13. Method according to claim 11 or 12,
**characterized in that**, at least within a time period, the measurement of the capacitance at the measurement signal terminal (12a-c) is carried out according to the principle of mutual capacitance, the reference signal terminal (12a-c) thus having an actively generated, defined, preferably periodic, particularly preferably rectangular, potential curve and the neutral signal terminal (12a-c) having a defined, preferably constant, potential, and particularly preferably a potential corresponding to the mass potential, the frequency of the potential curve at the reference signal terminal (12a-c) being higher, preferably higher by at least a factor of 100, than the maximum expected frequency of the capacitance change between neutral and measuring electrodes.

14. Method according to any one of claims 11 to 13,
**characterized in that** by the time-variable assignment of the electrode layers (1, 3, 5, 1a-g, 3a-g, 5a-h, 7a-h) to the signal terminals (12a-c) of the measuring unit (12), the same measured variables are recorded successively at different locations of the sensor system as local resolution or different measured variables are recorded at the same location of the sensor system as multimodality.

15. Method according to any one of claims 11 to 14,
**characterized in that** in a defined time interval the measurement signal is applied to one electrode (1, 3, 5, 1a-g, 3a-g, 5a-h, 7a-h), the reference signal is applied to another electrode (1, 3, 5, 1a-g, 3a-g, 5a-h, 7a-h) and the neutral signal is applied to all other electrodes (1, 3, 5, 1a-g, 3a-g, 5a-h, 7a-h).

16. Method according to any one of claims 11 to 15,
**characterised in that**, after the time interval has elapsed, the measurement signal is applied, in a further time interval, to a different electrode (1, 3, 5, 1a-g, 3a-g, 5a-h, 7a-h) than before and/or the reference signal is applied to a different electrode (1, 3, 5, 1a-g, 3a-g, 5a-h, 7a-h) than before and the neutral signal is applied to all other electrodes (1, 3, 5, 1a-g, 3a-g, 5a-h, 7a-h).

17. Method according to any one of claims 11 to 16,
**characterized in that** the measured capacitance change is generated by a deformation of the at least one dielectric body (0, 2, 4, 6, 8, 2a-b, 4a-d) by compressive force/stress, shear force/stress, tensile force/stress or by the approaching of an electrically conductive or polarizable body to the sensor system and thus different measured variables can be recorded.

## Revendications

1. Système de détection capacitif comprenant
a) au moins un corps diélectrique (0, 2, 4, 6, 8, 2a-b, 4a-d) contenant ou constitué d'au moins un élastomère,
b) au moins deux électrodes (1, 3, 5, 1a-g, 3a-g, 5a-h, 7a-h) isolées électriquement l'une de l'autre avec des connexions électriques séparées, les électrodes (1, 3, 5, 1a-g, 3a-g, 5a-h, 7a-h) étant constituées de matériaux élastiques et contenant des particules conductrices,
c) au moins une unité de mesure de capacité (12), qui présente respectivement les connexions de signaux (12a-c) suivantes :
i. Une connexion de signal de mesure (12a-c) pour détecter le flux de charge de/vers les électrodes (1, 3, 5, 1a-g, 3a-g, 5a-h, 7a-h) qui y sont connectées et qui font office d'électrodes de mesure pendant la mesure,
ii. Une connexion de signal de référence (12a-c) avec une courbe de potentiel prédéterminée, les électrodes (1, 3, 5, 1a-g, 3a-g, 5a-h, 7a-h) reliées à la connexion de signal de référence (12a-c) fonctionnant comme des électrodes de référence pour la mesure de la capacité des électrodes de mesure, les différences de potentiel entre les électrodes de référence et de mesure provoquant un flux de charge à la connexion de signal de mesure
iii. Une connexion de signal neutre (12a-c) avec une courbe de potentiel prédéterminée, la ou les capacités des électrodes de mesure par rapport aux électrodes (1, 3, 5, 1a-g, 3a-g, 5a-h, 7a-h) reliées à la connexion de signal neutre (12a-c) en tant qu'électrodes neutres ne contribuant pas, en liaison avec les différences de potentiel présentes entre les électrodes de mesure et les électrodes neutres, au flux de charge détecté à la connexion de signal de mesure (12a-c), ou leur contribution pouvant être nettement distinguée de la contribution des capacités entre les électrodes de référence et de mesure
d) au moins un multiplexeur (10) pour la commutation variable dans le temps des électrodes (1, 3, 5, 1a-g, 3a-g, 5a-h, 7a-h) avec les connexions de signaux (12a-c) de l'unité ou des unités de mesure (12) dans différentes configurations de mesure, une configuration de mesure réalisant l'affectation d'électrodes du système de capteurs à une connexion de signaux (12a-c),
dans lequel ledit au moins un corps diélectrique (0, 2, 4, 6, 8, 2a-b, 4a-d) et les électrodes (1, 3, 5, 1a-g, 3a-g, 5a-h, 7a-h) sont élastiquement extensibles de plus de 5 %,
dans lequel ledit au moins un corps diélectrique (0, 2, 4, 6, 8, 2a-b, 4a-d) est constitué de plusieurs couches diélectriques, et
dans lequel ledit au moins un corps diélectrique (0, 2, 4, 6, 8, 2a-b, 4a-d) contient des cavités anisotropes.

2. Système de détection capacitif selon la revendication 1,
**caractérisé en ce que** le système de détection comporte au moins trois électrodes (1, 3, 5, 1a-g, 3a-g, 5a-h, 7a-h) isolées électriquement les unes des autres et comportant des connexions électriques séparées.

3. Système de détection capacitif selon l'une des revendications 1 ou 2,
**caractérisé en ce qu'**au moment d'une mesure, chaque connexion de signal (12a-c) de l'unité de mesure capacitive (12) est reliée à au moins une électrode (1, 3, 5, 1a-g, 3a-g, 5a-h, 7a-h).

4. Système de détection capacitif selon l'une des revendications 1 à 3,
**caractérisé en ce que** les configurations de mesure de l'affectation des électrodes (1, 3, 5, 1a-g, 3a-g, 5a-h, 7a-h) du système de détection aux bornes de l'unité de mesure (12) sont variables dans le temps sur la durée de fonctionnement.

5. Système de détection capacitif selon l'une des revendications 1 à 4,
**caractérisé en ce qu'**au moment de la mesure, l'électrode de mesure dans la zone de la ligne d'alimentation (9a-c) est entourée au moins partiellement par au moins une électrode neutre, de sorte que la zone de la ligne d'alimentation n'influence pas la mesure.

6. Système de détection capacitif selon l'une des revendications 1 à 5,
**caractérisé en ce que** l'unité de mesure de capacité (12) comporte des moyens pour désaccorder un circuit oscillant ou un diviseur de tension capacitif pour mesurer la capacité, notamment pour détecter un temps de charge, un transfert de charge ou l'application d'un modulateur delta-sigma.

7. Système de détection capacitif selon l'une des revendications 1 à 6,
**caractérisé en ce que** ledit au moins un corps diélectrique (0, 2, 4, 6, 8, 2a-b, 4a-d) a la forme d'une structure plane ayant une taille plus petite dans une dimension que dans les deux autres dimensions, notamment une feuille.

8. Système de détection capacitif selon l'une des revendications 1 à 7,
**caractérisé en ce que** les particules conductrices contiennent du carbone et/ou des métaux ou en sont constituées.

9. Système de détection capacitif selon l'une des revendications 1 à 8,
**caractérisé en ce que** l'élastomère utilisé dans le corps diélectrique (0, 2, 4, 6, 8, 2a-b, 4a-d) et/ou dans les électrodes (1, 3, 5, 1a-g, 3a-g, 5a-h, 7a-h) est ou contient un matériau choisi dans le groupe constitué par le silicone, le fluorosilicone, le polyuréthane (PUR), le polynorbornène, le caoutchouc naturel (NR), le styrène-butadiène (SBR), l'isobutylène-isoprène (IIR), le terpolymère éthylène-propylène-diène (EPDM/EPM), le poly-chlorobutadiène (CR), le polyéthylène chlorosulfoné (CSM), l'acrylonitrile-butadiène (NBR), l'acrylonitrile-butadiène hydrogéné (HNBR), le caoutchouc fluoré, les élastomères thermoplastiques, en particulier les copolymères thermoplastiques de styrène, de préférence choisis dans le groupe constitué par le styrène-butadiène-styrène (SBS), le styrène-éthylène-butadiène-styrène (SEBS), le styrène-éthylène-propylène-styrène (SEPS), le styrène-éthylène-éthylène-propylène-styrène (SEEPS), le styrène-isoprène-styrène (SIS) et leurs combinaisons, des mélanges partiellement réticulés à base de polyoléfines, de préférence choisis parmi les caoutchoucs éthylène-propylène-diène et le polypropylène (EPDM/PP), le caoutchouc nitrile-butadiène et le polypropylène (NBR/PP) ainsi que le caoutchouc éthylène-propylène-diène et le polyéthylène (EPDM/PE), les copolymères d'uréthane thermoplastiques, choisis de préférence parmi les copolymères à segment dur aromatique et segment mou ester (TPU-ARES), à segment dur aromatique et segment mou éther (TPU-ARET) et à segment dur aromatique et segment mou ester/éther (TPU-AREE), ainsi que des mélanges des matériaux élastomères mentionnés.

10. Système de détection capacitif selon l'une des revendications 1 à 9,
**caractérisé en ce que** ledit au moins un corps diélectrique (0, 2, 4, 6, 8, 2a-b, 4a-d) et les électrodes (1, 3, 5, 1a-g, 3a-g, 5a-h, 7a-h) sont extensibles élastiquement de plus de 10 % et de manière particulièrement préférée de plus de 15 %.

11. Procédé de mesure multimodale et/ou sélective en fonction de la position de forces, de déformations et/ou de proximité d'un objet avec un système de capteurs capacitifs selon l'une des revendications 1 à 10.

12. Procédé selon la revendication 11,
**caractérisé en ce que** la mesure de la capacité au niveau de la connexion de signal de mesure (12a-c) s'effectue au moins pendant un certain temps selon le principe de la capacité intrinsèque, c'est-à-dire que la connexion de référence (12a-c) a un potentiel de terre défini, de préférence constant et particulièrement préféré, présente un potentiel correspondant et la connexion neutre (12a-c) présente une courbe de potentiel qui, en moyenne au fil du temps, s'écarte de la courbe de potentiel de la connexion de signal de mesure (12a-c) de moins de 20 %, de préférence de moins de 10 %, et de manière particulièrement préférée de moins de 5 %.

13. Procédé selon la revendication 11 ou 12,
**caractérisé en ce que** la mesure de la capacité sur la connexion de signal de mesure (12a-c) s'effectue au moins pendant un certain temps selon le principe de contre-capacité, c'est-à-dire que la connexion de référence (12a-c) présente une courbe de potentiel définie, de préférence périodique, de préférence rectangulaire, générée activement, et la borne de signal neutre (12a-c) présente un potentiel défini, de préférence constant, de préférence correspondant au potentiel de masse, la fréquence de la courbe de potentiel à la connexion de signal de référence (12a-c) étant alors plus élevée que celle de la connexion de signal neutre (12a-c), de préférence d'au moins un facteur 100 au-dessus de la fréquence maximale attendue de la variation de capacité entre les électrodes neutre et de mesure.

14. Procédé selon l'une des revendications 11 à 13,
**caractérisé en ce que** l'affectation variable dans le temps des couches d'électrodes (1, 3, 5, 1a-g, 3a-g, 5a-h, 7a-h) aux connexions de signal (12a-c) de l'unité de mesure (12) permet d'enregistrer successivement des grandeurs de mesure identiques à différents endroits du système de capteurs en tant que résolution locale ou des grandeurs de mesure différentes au même endroit du système de capteurs en tant que multimodalité.

15. Procédé selon l'une des revendications 11 à 14,
**caractérisé en ce que**, dans un intervalle de temps défini, le signal de mesure est appliqué à une électrode (1, 3, 5, 1a-g, 3a-g, 5a-h, 7a-h), le signal de référence est appliqué à une autre électrode (1, 3, 5, 1a-g, 3a-g, 5a-h, 7a-h) et le signal neutre est appliqué à toutes les autres électrodes (1, 3, 5, 1a-g, 3a-g, 5a-h, 7a-h).

16. Procédé selon l'une des revendications 11 à 15,
**caractérisé en ce qu'**après l'écoulement de l'intervalle de temps, dans un autre intervalle de temps, le signal de mesure est appliqué à une autre électrode (1, 3, 5, 1a-g, 3a-g, 5a-h, 7a-h) qu'auparavant et/ou le signal de référence est appliqué à une autre électrode (1, 3, 5, 1a-g, 3a-g, 5a-h, 7a-h) qu'auparavant et le signal neutre est appliqué à toutes les autres électrodes (1, 3, 5, 1a-g, 3a-g, 5a-h, 7a-h).

17. Procédé selon l'une quelconque des revendications 11 à 16,
**caractérisé en ce que** la variation de capacité mesurée est obtenue par une déformation dudit au moins un corps diélectrique (0, 2, 4, 6, 8, 2a-b, 4a-d) par une force/tension de compression, une tension de cisaillement, une force/tension de traction ou par l'approche d'un corps électriquement conducteur ou polarisable vers le système de détection et que différentes grandeurs de mesure peuvent ainsi être enregistrées.
